# EUROPEAN PATENT APPLICATION

(11) **EP 1 679 263 A2**
(43) Date of publication of application: **12.07.2006**
(21) Application number: 06250125.9
(22) Date of filing: 11.01.2006
(51) Int. Cl.: B65D 5/38

(54) **A blank for forming a container**

(30) Priority: 11.01.2005 GB 0500496
(71) Applicant: DS Smith Packaging Limited, West Glamorgan, Neath SA11 1PT (GB)
(72) Inventor: Wilkinson, Robert, Sketty Swansea SA2 9AT (GB)
(74) Representative: Johnson, Terence Leslie

(57) **Abstract**

The invention relates to a blank (1), of foldable, creasable material formed as a single, substantially flat elongate body having a series, in the embodiments four, of linearly adjacent panels (2,3,4,5), which are main panels, and which are defined by transverse fold or crease lines (6,7,8,9,10,11). There is a further panel (12), secured to one of the main panels (4) by rupturable means (13), which are spaced connecting elements which are part of the material of the blank (1).

There is a second part (15) of the further panel (12), defined by a fold line (16) and a complete through cut (17) which separates it from the main panels (4 and 5).

The blank (1) and a blank (100) are assembled to form a container which is usually used to house a relatively flat element such as a CD, DVD or like data carrier, or tablets, condoms, chocolates or similar substantially flat elements (not shown), housed in a tray (also not shown) which is seated in a through passage. In order to expose the contents of the tray, the tray and the further panel member are secured to opposite sides of an endless belt (not shown) such as a clear plastic belt trained round the panel member (2) and retained and guided for movement by guide means (18), shoulders (24) thereof keeping the belt in place.

## Description

The invention relates to a blank for forming a container, particularly an open-ended container in which relatively flat elements can be housed (such as, but not limited to, tablets, condoms, chocolates, CDs, DVDs or like data carriers).

Thus the formed container is suitable for housing a substantially flat item which is usually housed in a tray or similar holder, itself being generally flat.

A prior carton formed from a blank of material suffers from the disadvantage that to form the container from the blank is both labour intensive and time consuming, thus making it expensive to produce.

It is an object of the invention to seek to mitigate these disadvantages.

According to a first aspect of the invention, there is provided a blank for forming an open ended container, comprising a single substantially flat elongate body having a series of linearly adjacent panels defined by transverse fold or crease lines, and a further panel secured to one of the said panels by rupturable means, the arrangement being such that to form a container the further panel is folded to be on the one panel and secured thereto by suitable means, and the blank is then folded linearly about the fold or crease lines, the final panel being secured by suitable means to an intermediate panel of the series and the first panel defining an internal divider for a through passage between the open ends, and which divider forms two adjacent passage parts, in one of which the further panel is situated.

Using the invention it is possible to construct a container automatically from a blank using a folding and glueing machine.

The rupturable means may comprise integral parts of the blank connecting the further panel to the one panel. This provides for a relatively simple one piece construction of blank.

The rupturable means may thus comprise two spaced apart parts of the material of the blank defined by an otherwise through cut between the one panel and the further panel. This again simplifies construction in a die cutter, for example.

The further panel may comprise two panel parts defined by a crease or fold line and the second of which is not connected to the rest of the blank. This provides for a particularly robust construction.

The one panel may have a recess in an edge opposite the edge to which the further panel is secured. This provides for manual access to the further panel in the formed container.

One end panel may have guide means for seating and guiding a member which is trained therearound. This provides for loading and unloading of an additional element into the container, as to be described hereinafter.

The guide means may comprise recesses in opposite edges of the one end panel.

The recesses may each be rectangular in plan. This provides a positive guide, and a simple construction.

The blank may suitable comprise a sheet of creasable and foldable card, board, plastic or plastic coated card or board.

There may be four main panels in the series of linearly adjacent panels. This provides a relatively simple yet efficient construction.

The main panels may be separated by respective wall forming panels. These are relatively thin as compared to the main panels, and in the formed container form walls substantially orthogonal to the main panels.

According to a second aspect of the invention, there is provided an open end container erected from a folded and glued blank as hereinbefore defined, and which has a member trained round the one end panel.

The container may include an additional element inserted into one of the adjacent passage parts.

The additional element may comprise a specific holder for a CD, DVD or the like data carrier. Additionally, such elements may comprise tablets, condoms, chocolates or similar substantially flat elements.

There may be a CD, DVD or the like data carrier carried by the holder. Additionally, such elements may comprise tablets, condoms, chocolates or similar substantially flat elements carried by the holder.

A blank for forming an open ended container is hereinafter described, by way of example, with reference to the accompanying drawings.

Fig. 1 is a plan view of a first embodiment of blank according to the invention, formed of foldable, creasable material, before folding to form a container.

Fig. 2 is a view similar to Fig. 1 of a second embodiment of blank according to the invention; and

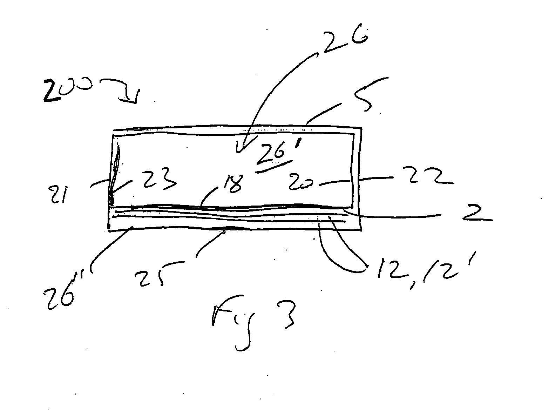

Fig. 3 is an end view of a carton formed from a blank of Fig. 1 or Fig. 2.

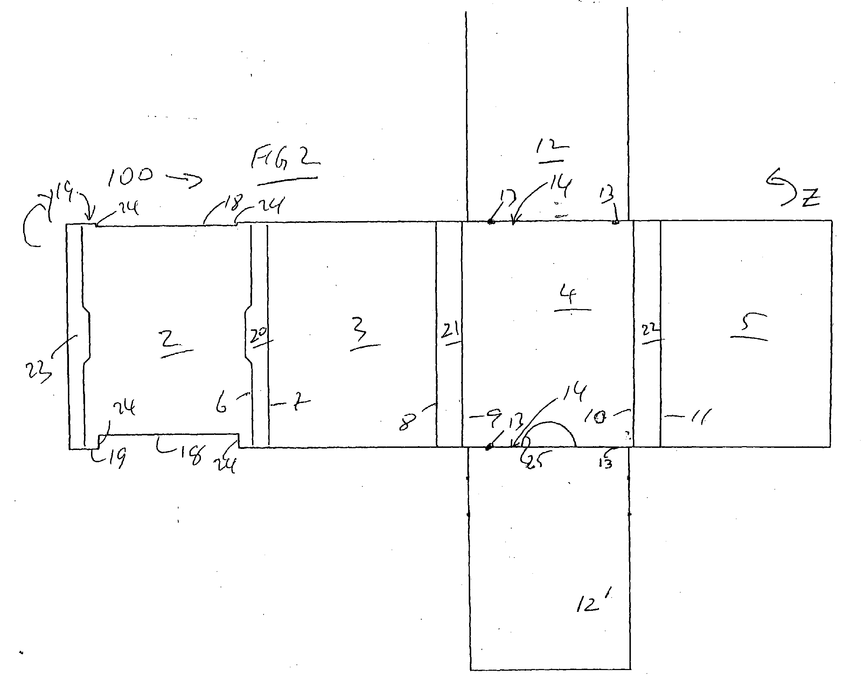

Referring to the drawings, in which like parts are indicated by like reference numerals there is shown a blank 1, 100 (Fig. 2) of foldable, creasable material formed as a single, substantially flat elongate body having a series, in the embodiments four, of linearly adjacent panels 2, 3, 4, 5, which are main panels, and which are defined by transverse fold or crease lines 6, 7, 8, 9, 10, 11. There is a further panel 12, 12' (Fig. 2) secured to one of the main panels 4 by rupturable means 13, which are spaced connecting elements which are part of the material of the blank 1. The further panel 12, 12' is separated from the main panel 4 by a through cut 14, except at the connecting elements 13, which as stated, are uncut parts of the material of the blank. The through cut 14 and the connecting elements 13 form a fold line about which the further panel 12, 12' can fold.

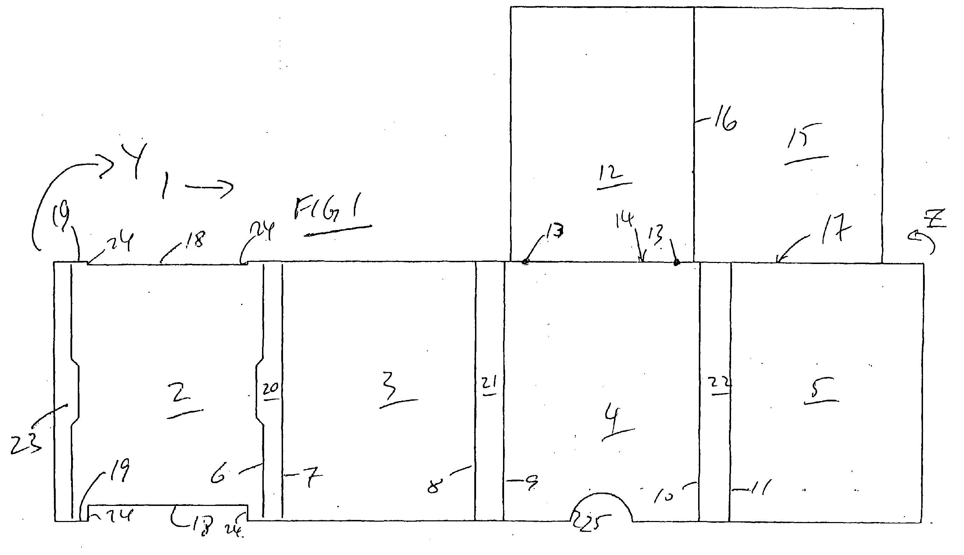

In Fig. 1, there is a second part 15 of the further panel 12, defined by a fold line 16 and a complete through cut 17 which separates it from the main panels 4 and 5.

In Fig. 2, there is as shown a second further panel 12' opposite the first one 12 and connected to the main panel 4 as is the further panel, by a through cut 14 and rupturable means 13 in the form of uncut parts of the material of the blank.

The main panel 2 in each embodiment has guide means 18 in the form of rectangular cut-outs in opposite edges 19.

There are also panel parts 20, 21, 22 between respective panels 2, 3 and 3, 4 and 4, 5 and which are relatively of less width than the main panels, the parts 21, 22 being of greater width than the part 20 and edge panel past 23. The panel parts and main panels are connected by the fold lines 6 - 11, the panel parts 20, 23 in the formed container 11 comprising opposite internal wall parts and the panel part 21, 22 opposite external wall parts of the container 200.

The container 200 is usually used to house a relatively flat element such as a CD, DVD or like data carrier, or tablets, condoms, chocolates or similar substantially flat elements (not shown), housed in a tray (also not shown) which is seated in a through passage. In order to expose the contents of the tray, the tray and the further panel member are secured to opposite sides of an endless belt (not shown) such as a clear plastic belt trained round the panel member 2 and retained and guided for movement by the guide means 18, shoulders 24 thereof keeping the belt in place.

To form the container 200 the belt is trained round the main panel member 2, the further flap part 15 is folded about hinge or crease lines 16 on to the further panel part 12 and secured thereto by a suitable adhesive such as glue. The combined further panel parts 12, 15 are then folded onto the underside of the main panel 4 so as to overlap the finger cut out 25.

Turning now to Fig. 2, in the embodiment, the further panel part 12' is folded onto the underside of the main panel 4 and then the further panel part 12 is folded and glued onto the further panel part 12'.

With these actions complete, the container 200 in each embodiment is formed by folding and glueing automatically, by folding the end panel part 2 over so that the wall part 23 is glued to the wall part 21, the panel part 3 is then folded over with the panel part 2 so that the wall part 20 is secured (glued) to the wall part 22, these folding actions being in the direction of arrow `Y'.

The opposite main end panel 5 is then folded about hinge line 11 in direction 'Z' to overlie the outside of the main panel 3, and glued thereto.

The through passage 26 is thereby formed, with the further panel parts 12, 12' lying in the vertically as viewed passage part 26' of lesser height than the upper part 26", the main panel 2 forming a partition.

A tray is then inserted into the upper as viewed passage part 26'.

The further panel parts 12, 12' are secured to the belt, the folding and glueing steps including applying adhesive such as glue to the belt (or further part 12, 12') so that the further part 12, 12' and belt are secured together, as are the tray and belt. When now the further panel part 12, 12' is gripped through the cut out 25 and pulled, the connecting means 13 are ruptured and the part 12, 12' can be pulled out of the container resulting in the tray being driven in the opposite direction out of the container by the belt for loading or unloading of an element such as a CD or other substantially flat element as hereinbefore defined.

Pushing the further panels 12, 12' back into the container 200 draws the tray back into the container in the opposite direction, again via the belt.

The rupturable elements 13 act as a tamper evident indicator in that if they are broken it is readily apparent that the container has been used and hence the contents of the tray may not be in the required pristine condition.

It will be understood too that the tray can be mounted in the container by hand, or automatically in machine operation such as provided by existing containing machinery.

The blank hereinbefore described has the following advantageous and inventive features:-
1. four main panels in the series of linearly adjacent panels;
2. the main panels being separated by respective wall forming panels;
3. an open end container being erectable from a folded and glued blank and which has a driving member trained round the one end panel;
4. an element inserted into one of the adjacent passage parts;
5. element comprising a holder for CD, DVD or the like data carrier, or tablets, condoms, chocolates or similar substantially flat elements;
6. a CD, DVD or the like data carrier, or tablets, condoms, chocolates or similar substantially flat items carried by the holder.

## Claims

1. A blank comprising a sheet of creasable and foldable card, board, plastic or plastic coated card or board for forming an open ended container, the blank comprising a single substantially flat elongate body having a series of linearly adjacent panels defined by transverse fold or crease lines, **characterised by** a further panel secured to one of the said panels by rupturable means, the arrangement being such that to form a container the further panel is folded to lie on the one panel and secured thereto by suitable means, and the blank is then folded linearly about the fold or crease lines, the further panel being secured by suitable means to an intermediate panel of the series and the first panel defining an internal divider for a through passage between the open ends, and which divider forms two adjacent passage parts, in one of which the further panel is situated.

2. A blank according to Claim 1, the rupturable means comprising an integral part of the blank connecting the further panel to the one panel.

3. A blank according to Claim 2, the rupturable means comprising two spaced apart parts of the material of the blank defined by an otherwise through cut between the one panel and the further panel.

4. A blank according to any preceding claim, the further panel comprising two further panel parts.

5. A blank according to Claim 4, the panel parts being defined by a crease or fold line and the second of which is not connected to the rest of the blank.

6. A blank according to Claim 4, the two further panel parts being on opposite sides of the one main panel and each connected thereto by said rupturable means.

7. A blank according to any preceding claim, the one panel having a recess in an edge opposite the edge to which the further panel is secured.

8. A blank according to any preceding claim, one end panel having guide means for seating and guiding a driving member which is trained therearound.

9. A blank according to Claim 8, the guide means being recessed in opposite edges of the one end panel.

10. A blank according to Claim 9, the recesses each being rectangular in plan.

11. A container assembled from a blank according to any preceding claim.
